# FASCICULE DE BREVET EUROPEEN

(11) **EP 1 856 399 B1**
(45) Date de publication et mention de la délivrance du brevet: **02.05.2012**
(21) Numéro de dépôt: 06726043.0
(22) Date de dépôt: 08.03.2006
(51) Int. Cl.: F02M 25/07, F16K 3/10, F16K 11/074, F16K 31/04

(54) **DISPOSITIF DE RECIRCULATION DE GAZ D'ECHAPPEMENT COMPORTANT UNE VANNE DE REGULATION DE DEBIT ET DE RACCORDEMENT SELECTIF**
EIN STROMREGEL- UND GEZIELT VERBINDBARES VENTIL UMFASSENDE ABGASRÜCKFÜHRVORRICHTUNG
EXHAUST GAS RECYCLING DEVICE COMPRISING A FLOW REGULATING AND SELECTIVELY CONNECTING VALVE

(30) Priorité: 09.03.2005 FR 0502347
(43) Date de publication de la demande: 21.11.2007
(73) Titulaire: Valeo Systèmes de Contrôle Moteur, 95800 Cergy Saint Christophe (FR)
(72) Inventeur: ALBERT, Laurent, 60640 Verderie (FR)
(86) Numéro de dépôt international: PCT/FR2006/000512
(87) Numéro de publication internationale: WO 2006/095087

(56) Documents cités:
- EP-A- 1 273 786
- EP-A- 1 275 838
- EP-A- 1 363 013
- CA-A1- 2 215 242
- DE-A1- 10 207 922
- DE-A1- 19 812 702
- DE-A1- 19 932 313
- FR-A- 2 724 976
- FR-A- 2 827 011
- US-B1- 6 378 509

## Description

La présente invention concerne un dispositif de recirculation des gaz d'échappement utilisable notamment pour réinjecter dans le circuit d'admission d'un moteur thermique une partie des gaz d'échappement.

### ARRIERE PLAN DE L'INVENTION

Un dispositif de recirculation de gaz d'échappement comprend généralement une voie refroidie et une voie non refroidie raccordées par un organe de raccordement sélectif à un conduit qui est relié au circuit d'admission du moteur et qui est pourvu d'une vanne de régulation de débit. L'organe de raccordement sélectif comporte une chambre dans laquelle débouchent les voies refroidie et non refroidie, et un clapet mobile dans la chambre entre une position de raccordement de la voie non refroidie et d'obturation de la voie refroidie et une position de raccordement de la voie refroidie et d'obturation de la voie non refroidie. La vanne est montée entre deux tronçons du conduit et comprend un corps délimitant une chambre dans laquelle débouchent les tronçons de conduit, un élément de régulation de débit percé d'un orifice de passage étant monté mobile dans la chambre pour définir une section de passage variable des gaz d'échappement. Ce dispositif de recirculation de gaz d'échappement présente une structure relativement complexe et encombrante.

L'un des mode de réalisation décrits dans le document EP 1 273 786 a trait à un dispositif de recirculation de gaz d'échappement comprenant une voie refroidie et une voie non refroidie raccordées par un moyen de raccordement sélectif à un conduit, ce moyen de raccordement sélectif coopérant avec un moyen de régulation qui est monté sur le même axe de rotation.

Un autre dispositif de recirculation de gaz d'échappement comprenant une vanne à voies multiples est décrit dans le document US 6, 378, 509 B1.

### OBJET DE L'INVENTION

Il serait donc intéressant de disposer d'un dispositif de recirculation des gaz d'échappement qui soit simple et compact.

### BREVE DESCRIPTION DE L'INVENTION

A cet effet, on prévoit, selon l'invention, un dispositif de recirculation de gaz d'échappement comprenant une voie refroidie et une voie non refroidie raccordées par un moyen de raccordement sélectif à un conduit, caractérisé en ce que le moyen de raccordement sélectif est constitué d'une vanne comportant une chambre raccordée au conduit et recevant un élément de régulation de débit mobile et percé d'un orifice de passage pour définir une section de passage variable des gaz d'échappement, les voies refroidie et non refroidie ayant chacune une extrémité débouchant sur une paroi de la chambre et l'élément de régulation étant monté en regard de cette paroi pour être mobile entre une première position extrême dans laquelle l'orifice de passage est en regard de la voie refroidie et une deuxième position extrême dans laquelle l'orifice de passage est en regard de la voie non refroidie, l'élément de régulation ayant une position intermédiaire dans laquelle l'élément de régulation obture les voies refroidie et non refroidie de sorte que l'élément de régulation assure une régulation de débit dans le conduit ainsi qu'un raccordement sélectif des voies refroidie et non refroidie au conduit.

Ainsi, le déplacement de l'élément de régulation de sa position intermédiaire vers sa première position extrême permet de réguler le débit des gaz d'échappement issus de la voie refroidie tandis que le déplacement de l'élément de régulation de sa position intermédiaire vers sa deuxième position extrême permet de réguler le débit des gaz d'échappement issus de la voie non refroidie. Il est ainsi assuré une régulation de débit dans le conduit. En outre, lorsque l'élément de régulation est dans l'une de ses positions extrêmes ou dans sa position intermédiaire, l'élément de régulation assure un raccordement sélectif des voies refroidie et non refroidie au conduit. La vanne assure de la sorte une double fonction de régulation de débit et de sélection de la voie raccordée au conduit. En outre, l'élément de régulation peut être déplacé dans un plan perpendiculaire au flux des gaz d'échappement de sorte que les moyens de déplacement de l'élément de régulation ne supportent que de façon limitée les efforts exercés sur l'élément de régulation par les gaz d'échappement sous pression.

Selon un mode de réalisation particulier, l'élément de régulation est formé d'un disque monté dans la chambre pour pivoter entre ses deux positions extrêmes.

Le déplacement du disque peut être obtenu de manière particulièrement simple au moyen d'un moteur électrique par exemple. Cette structure de la vanne est particulièrement compacte.

De préférence, les trois positions du disque sont à 120° les unes des autres.

Cet agencement permet d'obtenir la plus forte section de passage pour un encombrement donné.

Selon une caractéristique avantageuse, le disque et la paroi sont en contact par au moins une première collerette entourant l'orifice de passage et, de préférence, le disque et la paroi sont en contact également par au moins une deuxième collerette symétrique de la première collerette par rapport à un axe de rotation du disque.

L'étanchéité est alors réalisée au niveau d'une surface relativement restreinte, à savoir le bord de la collerette, ce qui simplifie l'obtention d'une bonne étanchéité. En outre, la réalisation de plusieurs collerettes symétriques permet une répartition des efforts d'application du disque contre la paroi.

Selon une autre caractéristique avantageuse, la vanne comprend un élément de rappel du disque en position intermédiaire et, de préférence, l'élément de rappel comprend deux ressorts de torsion reliés au disque et au corps pour exercer sur le disque des couples de rappel opposés.

La vanne est alors dans son état d'obturation des deux voies en l'absence d'alimentation en énergie.

D'autres caractéristiques et avantages de l'invention ressortiront à la lecture de la description qui suit de modes de mise en oeuvre particuliers non limitatifs de l'invention.

### BREVE DESCRIPTION DES DESSINS

Il sera fait référence aux dessins annexés, parmi lesquels :
- la figure 1 est une vue schématique d'un moteur thermique équipé d'un dispositif de recirculation des gaz d'échappement,
- la figure 2 est une vue en coupe axiale d'une vanne conforme à l'invention pour la première position de l'élément de régulation,
- la figure 3 est une vue analogue à celle de la figure 2 pour une deuxième position de l'élément de régulation,
- la figure 4 est une vue de dessus de la paroi formant le siège de l'élément de régulation,
- la figure 5 est une vue analogue à celle de la figure 3 d'une vanne selon une variante de réalisation.

### DESCRIPTION DETAILLEE DE L'INVENTION

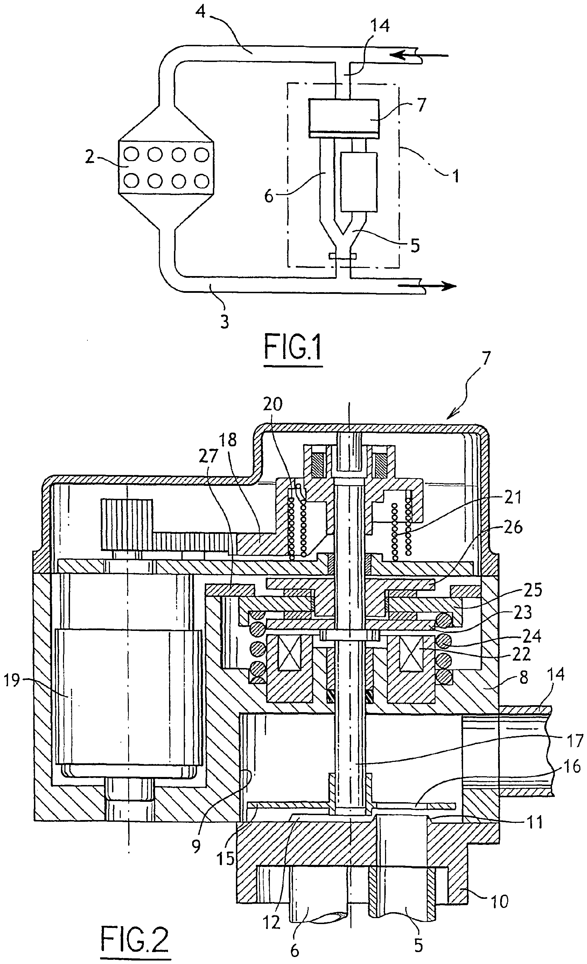

En référence à la figure 1, le dispositif de recirculation des gaz d'échappement, généralement désigné en 1, est destiné à équiper un moteur thermique 2 en étant raccordé d'une part, au conduit 3 d'échappement des gaz brûlés et, d'autre part, au conduit 4 d'admission d'air. Cet.agencement est connu en lui-même.

Le dispositif de recirculation 1 comprend une voie refroidie 5 et une voie non refroidie 6 qui sont connues en elles-mêmes et qui sont raccordées d'une part au conduit d'échappement 3 et, d'autre part, au conduit d'admission 4 par l'intermédiaire d'une vanne 7.

En référence également aux figures 2 à 4, la vanne 7 comprend un corps 8 qui délimite une chambre 9 fermée par une bride 10 percée de conduits auxquels sont reliées des extrémités correspondantes des voies refroidie 5 et non refroidie 6. La bride 10 est fixée au corps 8 de manière amovible, par exemple au moyen de vis non visibles sur les figures, et forme une paroi de la chambre 9. La bride 10 comporte du côté de la chambre 9 une surface en saillie de laquelle s'étendent à 120° les unes des autres une première collerette 11 entourant le débouché de la voie refroidie 5, une collerette 12 entourant le débouché de la voie non refroidie 6 et une collerette 13 borgne. Les collerettes 11, 12 et 13 sont identiques.

La chambre 9 est reliée au conduit d'admission 4 par un conduit de liaison 14 débouchant dans la chambre 9.

La chambre 9 reçoit un élément de régulation de débit formé d'un disque 15 percé d'un orifice de passage 16 de section comparable à celle des voies refroidie 5 et non refroidie 6. Le disque 15 s'étend en regard des collerettes 11, 12, 13 et de la bride 10. Le disque 15 est solidaire d'une extrémité d'un arbre 17 dont une extrémité opposée est solidaire d'un secteur denté 18 entraîné en rotation par l'intermédiaire d'un moteur électrique 19 ici à courant continu.

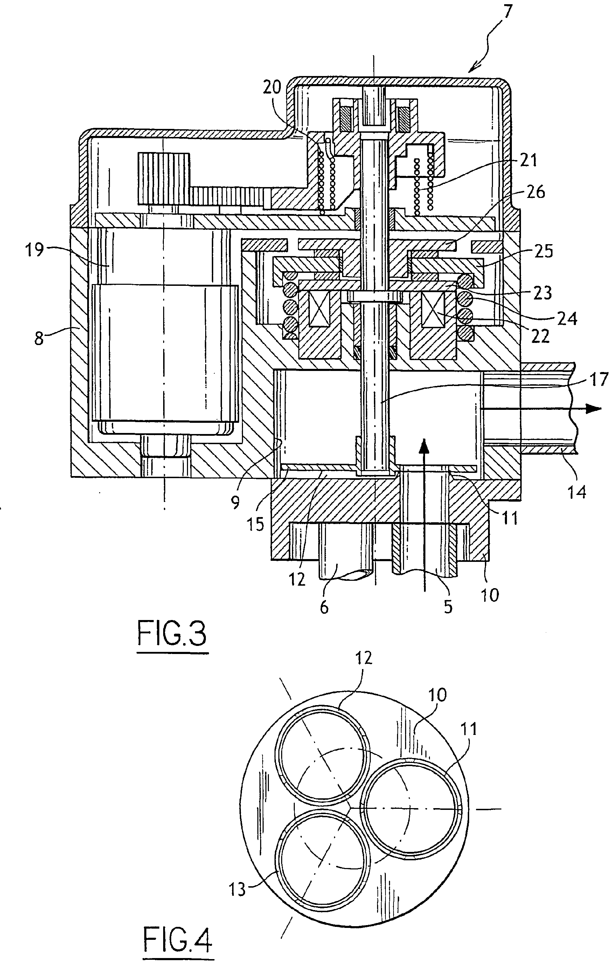

Le disque 15 peut ainsi être entraîné en rotation entre deux positions extrêmes, à savoir :
- une première position extrême (représentée aux figures 2 et 3) dans laquelle l'orifice de passage 16 s'étend en regard de la collerette 11 et donc de la voie refroidie 5 (le disque 15 dégage alors la voie refroidie 5 et obture la voie non refroidie 6), et
- une deuxième position extrême (non représentée) dans laquelle l'orifice de passage 16 se trouve en regard de la collerette 12 et donc de la voie non refroidie 6 (le disque 15 dégage alors la voie non refroidie 6 et obture la voie refroidie 5).

Entre ces deux positions extrêmes, le disque 15 possède une position intermédiaire (non représentée) dans laquelle l'orifice de passage 16 se trouve en regard de la collerette 13, le disque 15 obturant les voies refroidie 5 et non refroidie 6. Les deux positions extrêmes et la position intermédiaire sont à 120° les unes des autres. Cet agencement à 120° permet pour un encombrement donné de disposer de la plus importante section de passage.

La vanne 7 comprend un élément de rappel du disque 15 en position intermédiaire. L'élément de rappel comprend deux ressorts de torsion 20, 21, hélicoïdaux et coaxiaux à l'arbre 17, ayant chacun une extrémité reliée au secteur denté 18 et une extrémité reliée au corps 8 pour exercer sur le secteur denté 18 et donc sur le disque 15 des couples de rappel opposés.

L'arbre 17 est reçu dans le corps 8, non seulement à pivotement, mais également à coulissement de telle manière que le disque 15 soit mobile entre deux positions axiales, à savoir :
- une première position (représentée à la figure 3) dans laquelle le disque 15 est appliqué contre les collerettes 11, 12, 13, les collerettes 11, 12, 13 formant le siège du disque 15, et
- une deuxième position (représentée à la figure 2) dans laquelle le disque 15 est décollé des collerettes 11, 12, 13.

La vanne 7 comprend des moyens de déplacement du disque 15 entre sa position appliquée et sa position décollée.

Les moyens de déplacement comprennent une bobine 22 fixée sur le corps 8 de manière coaxiale à l'arbre 17 pour s'étendre en regard d'un plateau 23 en matériau magnétique solidaire en translation de l'arbre 17. La bobine 22 est reliée à des moyens d'alimentation en énergie électrique non représentés de telle manière que lorsque la bobine 22 est alimentée, elle attire le plateau 23 et déplace l'arbre 17 et le disque 15 vers la position appliquée du disque 15.

Les moyens de déplacement comprennent également un organe de rappel du disque 15 en position décollée. L'organe de rappel comprend un ressort hélicoïdal de compression 24 qui est disposé coaxialement à l'arbre 17 entre le corps 8 et un plateau 25 fixe en translation et libre en rotation par rapport à l'arbre 17. En l'espèce, le plateau 25 est monté libre en rotation sur une douille 26 épaulée solidaire de l'arbre 17 et prend appui axialement sur l'épaulement de la douille 26 et sur le plateau 23 par des patins de glissement ou des butées à aiguilles. Le ressort 24 repousse le plateau 25 contre une butée 27 solidaire du corps 8. La butée 27 définit la position décollée du disque 15.

Le fonctionnement de la vanne va maintenant être décrit.

Lorsque le moteur thermique 2 n'est pas en fonctionnement, le moteur électrique 19 et la bobine 22 ne sont pas alimentés. Le ressort 24 maintient le disque 15 en position décollée et les ressorts de torsion 20, 21 maintiennent le disque 15 en position intermédiaire.

La gestion de la recirculation des gaz d'échappement est assurée de façon connue en elle-même par l'unité de contrôle moteur, ou une unité dédiée connue en elle-même, à laquelle est relié le moteur électrique 19 et au moins indirectement la bobine 22.

Lorsque le moteur thermique 2 est dans une phase de recirculation des gaz d'échappement, le moteur électrique 19 est commandé de manière à amener le disque 15 vers l'une ou l'autre de ses deux positions extrêmes selon que la voie refroidie 5 ou la voie non refroidie 6 doit être raccordée au conduit d'admission 4 par le conduit de liaison 14. On comprend que, lorsque le disque 15 est dans l'une de ses deux positions extrêmes, il assure un débit maximum puisque l'orifice de passage 16 se trouve complètement en regard de l'une des deux voies 5, 6. En revanche, lorsque le disque 15 se trouve entre sa position intermédiaire d'obturation et l'une de ses positions extrêmes, l'orifice de passage 16 se trouve seulement partiellement en regard de l'une des deux voies de sorte que le disque 15 masque une partie de cette voie. Le disque 15 réduit ainsi la section de passage du flux de gaz d'échappement issu de la voie en question et permet alors une régulation du débit.

On notera que le disque 15 étant en position décollée lorsque le moteur thermique est en phase de recirculation, il subsiste une fuite au niveau du débouché de la voie en regard de laquelle le disque 15 s'étend pour l'obturer. Cette fuite a un débit négligeable.

Lorsque le disque 15 pivote entre ses positions extrêmes, il n'est pas appliqué contre les collerettes 11, 12, 13. Ceci permet de limiter le frottement et donc l'usure des pièces en contact. La détection de la position angulaire du disque 15 est réalisée de manière classique.

En dehors des phases de recirculation des gaz d'échappement, le moteur électrique 19 amène le disque 15 dans sa position intermédiaire la bobine 22 est alimentée et maintient le disque 15 en position appliquée.

Pour déplacer le disque 15 entre ses différentes positions angulaires en cas de retour en phase de recirculation, l'alimentation de la bobine 22 est préalablement coupée de manière que le ressort 24 puisse amener le disque 15 en position décollée puis le moteur électrique 19 est alimenté pour déplacer le disque 15 dans la position recherchée.

La présence des collerettes 11, 12, 13 permet de simplifier la réalisation d'une étanchéité entre le disque 15 et le siège de celui-ci et d'équilibrer les efforts qui s'exercent sur le disque 15 lorsque celui-ci est en position appliquée.

La vanne 7 assure une double fonction de régulation de débit et de sélection de la voie 5, 6 raccordée au conduit 14. En outre, le disque 15 étant déplacé dans un plan perpendiculaire au flux des gaz d'échappement, les moyens de déplacement du disque 15 ne supportent que de façon limitée les efforts exercés sur le disque 15 par les gaz d'échappement sous pression.

Lorsque le moteur thermique 2 est arrêté, l'alimentation de la bobine 22 est coupée de sorte que le ressort 24 repousse le disque 15 en position décollée. Il est ainsi évité que des particules ou agglomérats contenus dans les gaz d'échappement ne viennent coller le disque 15 sur la bride 10.

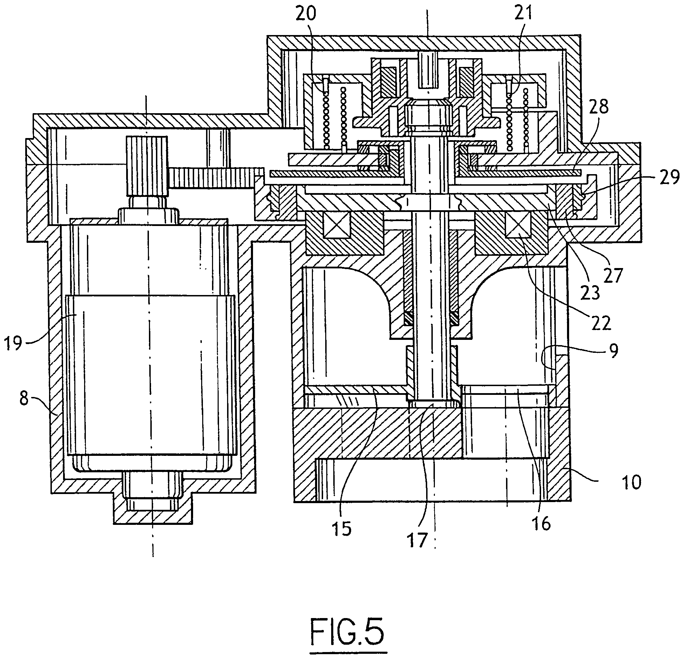

Selon une variante représentée à la figure 5, l'organe de rappel du disque 15 en position décollée comprend un aimant permanent 27, de forme circulaire, fixé en périphérie du plateau 23 en regard d'une platine magnétique 28 fixe en translation et libre en rotation par rapport au corps 8. La platine magnétique 28 est coaxiale à l'arbre 17 et est fixée au corps 8 par un palier de guidage en rotation et des butées axiales à aiguilles. Le plateau 23 est en matériau magnétique.

L'aimant permanent 27 a un diamètre supérieur à celui de la bobine 22.

L'aimant permanent 27 est associé à une armature 29 de circulation du flux magnétique engendré par l'aimant permanent 27 de manière que l'aimant permanent 27 engendre une force d'attraction de la platine magnétique 28.

L'armature 29 comprend, de façon connue en soi, une section saturante restreignant le flux engendré par l'aimant permanent 27 de manière à limiter l'accroissement de la force d'attraction produite par l'aimant permanent 27 à mesure que l'aimant permanent se rapproche de la platine 28. Ceci facilite le déplacement du disque 15 par la bobine 22 lorsque celle-ci est alimentée pour déplacer le disque 15 en position appliquée contre les collerettes 11, 12, 13.

Ainsi, lorsque la bobine 22 est alimentée, elle attire le plateau 23 et amène le disque 15 en position appliquée. Lorsque l'alimentation de la bobine 22 est coupée, l'aimant permanent 27 attire la platine 28 et entraîne le disque 15 en position décollée.

La différence de diamètre entre l'aimant permanent 27 et la bobine 22 est telle que l'aimant permanent 27 et la bobine 22 sont écartés l'un de l'autre de manière que l'aimant permanent 27 ne soit que peu, ou pas, soumis au champ magnétique engendré par la bobine 22.

Dans cette variante, le secteur denté entraîné par le moteur électrique 19 est solidaire du plateau 23.

Les ressorts de torsion 20, 21, hélicoïdaux et coaxiaux à l'arbre 17, ont chacun une extrémité reliée à une partie solidaire en rotation de l'arbre 17 et une extrémité reliée au corps 8 pour exercer sur l'arbre 17 et donc sur le disque 15 des couples de rappel opposés.

Dans cette variante également, la surface de la bride 10 s'étendant du côté de la chambre 9 est lisse et le disque 15 possède trois collerettes en saillie (seules deux collerettes sont visibles sur la figure 5) : une collerette entourant l'orifice de passage 16 et deux collerettes borgnes.

Le fonctionnement de la vanne conforme à cette variante est identique à celui précédemment décrit.

Bien entendu, l'invention n'est pas limitée au mode de réalisation décrit et on peut y apporter des variantes de réalisation sans sortir du cadre de l'invention tel que défini par les revendications.

En particulier, l'élément de régulation pourrait avoir une structure différente de celle décrite et être par exemple constituée d'une plaque coulissante.

En outre, les voies 5 et 6 peuvent être raccordées directement à la chambre 9 par des embouts de connexion agencés extérieurement sur le corps 8.

Les collerettes 11, 12, 13 sont facultatives.

La vanne 7 peut être montée en amont des voies refroidie et non refroidie et non en aval comme représenté sur la figure 1.

En phase de recirculation, on peut prévoir d'amener le disque 15 en position appliquée une fois celui-ci dans la position angulaire recherchée raccordant une des voies au conduit 14 si l'on ne souhaite pas qu'existe une fuite sur l'autre voie. En cas de modification de la position angulaire, le disque 15 est préalablement décollé puis, après pivotement, ramené en position appliquée.

## Revendications

1. Vanne pour dispositif de recirculation de gaz d'échappement comprenant une voie refroidie (5) et une voie non refroidie (6) raccordées par un moyen de raccordement sélectif (7) formé par ladite vanne à un conduit (14), ladite vanne (7) comportant une chambre (9) raccordée au conduit et recevant un élément de régulation de débit (15) mobile et percé d'un orifice de passage (16) pour définir une section de passage variable des gaz d'échappement, les voies refroidie (5) et non refroidie (6) ayant chacune une extrémité débouchant sur une paroi (10) de la chambre (9) et l'élément de régulation (15) étant monté mobile en regard de cette paroi (10) **caractérisé en ce que** ledit élément de régulation (15) comprend un disque (15) solidaire d'une extrémité d'un arbre (17) dont une extrémité opposée est solidaire d'un secteur denté (18), ledit secteur denté (18) permettant à l'élément de régulation (15) d'être mobile entre une première position extrême dans laquelle l'orifice de passager (16) est en regard de la voie refroidie (15) et une deuxième position extrême dans laquelle l'orifice de passage (16) est en regard de la voie non refroidie (6), l'élément de régulation (15) ayant une position intermédiaire dans laquelle l'élément de régulation (15) obture les voies refroidie (5) et non refroidie (6) de sorte que l'élément de régulation (15) de sa position intermédiaire vers sa première position extrême permet de réguler le débit des gaz d'échappement issus de la voie refroidie (5) tandis que le déplacement de l'élément de régulation (15) de sa position intermédiaire vers sa deuxième position extrême permet de réguler le débit des gaz d_{'}échappement issus de la voie non refroidie (6)

2. Vanne selon la revendication 1, **caractérisé en ce que** l'élément de régulation est formé d'un disque (15) monté dans la chambre (9) pour pivoter entre ses deux positions extrêmes.

3. Vanne selon la revendication 2, **caractérisé en ce que** les trois positions du disque (15) sont à 120° les unes des autres.

4. Vanne selon la revendication 2, **caractérisé en ce que** le disque (15) et la paroi (10) sont en contact par au moins une première collerette (11) entourant l'orifice de passage (16).

5. Vanne selon la revendication 4, **caractérisé en ce que** le disque (15) et la paroi (10) sont en contact également par au moins une deuxième collerette (12, 13) symétrique de la première collerette (11) par rapport à un axe de rotation du disque.

6. Vanne selon la revendication 2, **caractérisé en ce que** la vanne (7) comprend un élément (20, 21) de rappel du disque (15) en position intermédiaire.

7. Vanne selon la revendication 6, **caractérisé en ce que** l'élément de rappel comprend deux ressorts de torsion (20, 21) reliés au disque (15) et au corps (8) pour exercer sur le disque des couples de rappel opposés.

8. Vanne selon la revendication 1, **caractérisé en ce que** le disque (15) est mobile axialement entre une position appliquée contre la paroi (10) et une position décollée de la paroi et **en ce que** la vanne (7) comprend des moyens de déplacement (24 ; 27) du disque entre ses deux positions axiales.

9. Dispositif de recirculation de gaz d'échappement comprenant une voie refroidie (5) et une voie non refroidie (6) raccordées par un moyen de raccordement sélectif (7) formé par une vanne selon l'une quelconque des revendications précédentes à un conduit (14).

## Claims

1. Valve for an exhaust gas recirculation device comprising a cooled path (5) and an uncooled path (6) which are connected by a selective connecting means (7) formed by said valve to a pipe (14), said valve (7) comprising a chamber (9) connected to the pipe and housing a flow regulating element (15) that is able to move and is pierced with a through-orifice (16) so as to define a variable cross section for the passage of the exhaust gases, the cooled (5) and uncooled (6) paths each having an end opening onto a wall (10) of the chamber (9) and the regulating element (15) being mounted facing this wall (10), **characterized in that** said regulating element (15) comprises a disk (15) secured to one end of a shaft (17) of which the opposite end is secured to a toothed sector (18), said toothed sector (18) allowing the regulating element (15) to move between a first extreme position in which the through-orifice (16) faces the cooled path (5) and a second extreme position in which the through-orifice (16) faces the uncooled path (6), the regulating element (15) having an intermediate position in which the regulating element (15) closes off the cooled (5) and uncooled (6) paths so that the regulating element (15) from its intermediate position towards its first extreme position can be used to regulate the flow rate of the exhaust gases emanating from the cooled path (5), whereas the movement of the regulating element (15) from its intermediate position towards its second extreme position can be used to regulate the flow rate of the exhaust gases emanating from the uncooled path (6).

2. Valve according to Claim 1, **characterized in that** the regulating element is formed of a disk (15) mounted in the chamber (9) to pivot between its two extreme positions.

3. Valve according to Claim 2, **characterized in that** the three positions of the disk (15) are spaced 120° apart.

4. Valve according to Claim 2, **characterized in that** the disk (15) and the wall (10) are in contact via at least one first collar (11) surrounding the through-orifice (16).

5. Valve according to Claim 4, **characterized in that** the disk (15) and the wall (10) are also in contact via at least one second collar (12, 13) symmetric with the first collar (11) with respect to an axis of rotation of the disk.

6. Valve according to Claim 2, **characterized in that** the valve (7) comprises a return element (20, 21) for returning the disk (15) to the intermediate position.

7. Valve according to Claim 6, **characterized in that** the return element comprises two torsion springs (20, 21) connected to the disk (15) and to the body (8) so as to exert opposing return torques on the disk.

8. Valve according to Claim 1, **characterized in that** the disk (15) can move axially between a position in which it is pressed against the wall (10) and a position in which it is away from the wall, and **in that** the valve (7) comprises movement means (24; 27) for moving the disk between its two axial positions.

9. Exhaust gas recirculation device comprising a cooled path (5) and an uncooled path (6) which are connected by a selective connecting means (7) formed by a valve according to any one of the preceding claims.

## Patentansprüche

1. Ventil für eine Abgasrückführvorrichtung, die einen gekühlten Kanal (5) und einen nicht gekühlten Kanal (6) enthält, die durch eine von dem Ventil gebildete selektive Verbindungseinrichtung (7) mit einer Leitung (14) verbunden sind, wobei das Ventil (7) eine Kammer (9) aufweist, die mit der Leitung verbunden ist und ein Durchsatzregelelement (15) aufnimmt, das beweglich ist und eine Durchgangsöffnung (16) aufweist, um einen variablen Durchgangsquerschnitt der Abgase zu definieren, wobei der gekühlte (5) und der nicht gekühlte Kanal (6) je ein Ende haben, das auf einer Wand (10) der Kammer (9) mündet, und das Regelelement (15) beweglich gegenüber dieser Wand (10) montiert ist, **dadurch gekennzeichnet, dass** das Regelelement (15) eine Scheibe (15) enthält, die fest mit einem Ende einer Welle (17) verbunden ist, deren gegenüberliegendes Ende fest mit einem gezahnten Sektor (18) verbunden ist, wobei der gezahnte Sektor (18) es dem Regelelement (15) ermöglicht, zwischen einer ersten Endstellung, in der die Durchgangsöffnung (16) sich gegenüber dem gekühlten Kanal (5) befindet, und einer zweiten Endstellung beweglich zu sein, in der die Durchgangsöffnung (16) sich gegenüber dem nicht gekühlten Kanal (6) befindet, wobei das Regelelement (15) eine Zwischenstellung hat, in der das Regelelement (15) den gekühlten (5) und den nicht gekühlten Kanal (6) verschließt, so dass das Regelelement (15) es von seiner Zwischenstellung zu seiner ersten Endstellung ermöglicht, den Durchsatz der von dem gekühlten Kanal (5) stammenden Abgase zu regeln, während die Verschiebung des Regelelements (15) von seiner Zwischenstellung in seine zweite Endstellung es ermöglicht, den Durchsatz der von dem nicht gekühlten Kanal (6) stammenden Abgase zu regeln.

2. Ventil nach Anspruch 1, **dadurch gekennzeichnet, dass** das Regelelement von einer Scheibe (15) gebildet wird, die in die Kammer (9) montiert wird, um zwischen ihren beiden Endstellungen zu schwenken.

3. Ventil nach Anspruch 2, **dadurch gekennzeichnet, dass** die drei Stellungen der Scheibe (15) 120° voneinander entfernt sind.

4. Ventil nach Anspruch 2, **dadurch gekennzeichnet, dass** die Scheibe (15) und die Wand (10) über mindestens einen die Durchgangsöffnung (16) umgebenden ersten Kragen (11) in Kontakt stehen.

5. Ventil nach Anspruch 4, **dadurch gekennzeichnet, dass** die Scheibe (15) und die Wand (10) ebenfalls über einen zweiten Kragen (12, 13) symmetrisch zum ersten Kragen (11) bezüglich einer Drehachse der Scheibe in Kontakt stehen.

6. Ventil nach Anspruch 2, **dadurch gekennzeichnet, dass** das Ventil (7) ein Element (20, 21) zur Rückstellung der Scheibe (15) in die Zwischenstellung enthält.

7. Ventil nach Anspruch 6, **dadurch gekennzeichnet, dass** das Rückstellelement zwei Torsionsfedern (20, 21) enthält, die mit der Scheibe (15) und dem Körper (8) verbunden sind, um auf die Scheibe entgegengesetzte Rückstellmomente auszuüben.

8. Ventil nach Anspruch 1, **dadurch gekennzeichnet, dass** die Scheibe (15) axial zwischen einer gegen die Wand (10) angelegten Stellung und einer von der Wand gelösten Stellung beweglich ist, und dass das Ventil (7) Verschiebeeinrichtungen (24; 27) der Scheibe zwischen ihren zwei axialen Stellungen enthält.

9. Abgasrückführvorrichtung, die einen gekühlten Kanal (5) und einen nicht gekühlten Kanal (6) enthält, die durch eine von einem Ventil nach einem der vorhergehenden Ansprüche gebildete selektive Verbindungseinrichtung (7) mit einer Leitung (14) verbunden sind.
